# EUROPEAN PATENT SPECIFICATION

(11) **EP 1 296 829 B1**
(45) Date of publication and mention of the grant of the patent: **21.06.2006**
(21) Application number: 01946646.5
(22) Date of filing: 22.06.2001
(51) Int. Cl.: B32B 27/32, B32B 27/28

(54) **HIGH MOISTURE BARRIER FILMS**
HOCHFEUCHTIGKEITSPERRENDE FOLIEN
FILMS A FORT EFFET DE BARRIERE CONTRE L'HUMIDITE

(30) Priority: 23.06.2000 US 603151
(43) Date of publication of application: 02.04.2003
(73) Proprietor: Honeywell International Inc., Morristown, New Jersey 07960 (US)
(72) Inventor: TSAI, Mingliang, Lawrence, Holmdel, NJ 07733 (US); BLUM, John, Middletown, DE 19709 (US)
(74) Representative: Hucker, Charlotte Jane
(86) International application number: PCT/US2001/019910
(87) International publication number: WO 2002/000435

(56) References cited:
- EP-A- 0 498 384
- EP-A- 0 800 914
- US-A- 4 677 017

## Description

### BACKGROUND OF THE INVENTION

### FIELD OF THE INVENTION

The present invention relates to multilayer films. More particularly, the invention pertains to coextruded or laminated films having at least one layer of a fluoropolymer homopolymer or copolymer, a layer of a cyclic olefin homopolymer or copolymer and an intermediate adhesive layer. Such films have a high moisture barrier property and are substantially transparent.

### DESCRIPTION OF THE PRIOR ART

It is well known in the art to produce single layer and multilayer fluoropolymer films. See, for example, U.S. patents 4,677,017; 4,659,625 and 5,139,878. As shown in U.S. patent 4,011,874, polymers may be formed by melt extruding through an orifice, and the molten polymer quickly quenched and then drawn. Although the moisture and vapor barrier properties of oriented fluoropolymer film has been known for years, an even greater degree of moisture and vapor barrier properties is desired for many packaging applications. In some applications it is also desirable to orient the films. For example, for a push through lidding used to blister package pharmaceuticals, it is desired to monoaxially orient the film in order to achieve one direction push through of the product. For high strength lidding, a biaxially oriented film would be desired.

Fluoropolymers such as poly(chlorotrifluoroethylene) PCTFE are exceptionally difficult to orient due to their extremely fast crystallization rate and thermally induced self-orientation. The fast crystallization rate of PCTFE produces a highly crystalline structure that hinders orientation and actually prevents further orientation beyond a certain point. Its thermally induced self-orientation results in a film, which upon unconstrained heating, self extends in the machine or longitudinally stretched direction and shrinks in the transverse direction. U.S. patent 4,510,301 discloses oriented films containing a copolymer of 40 to 60 mole percent ethylene and chlorotrifluoroethylene. U.S. patent 4,519,969 discloses a biaxially stretched film and a method for the manufacture thereof, containing at least 90 mole % of ethylene-tetrafluoroethylene copolymer. Various attempts have also been made to produce a multilayer fluoropolymer film structure, with most emphasis focused on the selection of the adhesive materials. U.S. patent 4,677,017 discloses coextruded multilayer films which include a fluoropolymer and a thermoplastic film which are joined by the use of an adhesive polymer. U.S. patent 4,659,625 discloses a fluoropolymer multilayer film structure which utilizes a vinyl acetate polymer adhesive layer. U.S. patent 5,139,878 discloses a fluoropolymer film structure using an adhesive layer of modified polyolefins.

U.S. patent 5,218,049 discloses films composed of cyclo olefins. U.S. patent 5,783,273 discloses press through blister packaging materials comprising a sheet of a cyclo olefin copolymer. U.S. patent 5,912,070 (equivalent to EP-A-0800914) discloses a packaging material comprising a layer of a cyclo olefin, a layer of a polyester and an imtermediate adhesive.

EP-A-0498384 discloses integrally molded composites and a method of making an integrally molded composite acide composed of a ring-opened polynorbornene matrix and a polyvinyl halide lamina and/or core component.

It would be desirable to produce a high water vapor barrier film structure which is transparent, and can be employed as packaging material.

### SUMMARY OF THE INVENTION

The invention provides a film as defined in claim 1.

The invention also provides a method of producing a film as defined in claim 18.

The present invention achieves a high moisture barrier, transparent film produced either by a coextrusion or a lamination process.

### DETAILED DESCRIPTION OF THE PREFERRED EMBODIMENT

The invention generally provides a film which comprises at least one fluoropolymer layer and at least one cyclo olefin polymer layer comprising at least cyclo olefin homopolymer or copolymer attached to a surface of the fluoropolymer layer by an intermediate adhesive layer of the type defined in claim 1.

The fluoropolymer layer may be comprised of homopolymers or copolymers or blends thereof as are well known in the art and are described in, for example, U.S. patent numbers 4,510,301; 4,544,721; and 5,139,878. Of these, particularly preferred fluoropolymers suitable to form multilayer barrier films of the present invention include homopolymers and copolymers of chlorotrifluomethylene, copolymers of ethylene-chlorotrifluoroethylene; copolymers of chlorotrifluoroethylene and vinylidine fluoride; and copolymers of chlorotrifluoroethylene and tetrafluoroethylene. Such copolymers of chlorotrifluoroethylene may contain up to 10%, and preferably up to 8 % by weight of the other comonomers such as vinylidine fluoride and tetrafluoroethylene. As used herein, copolymers include polymers having two or more monomer components. Most preferred are chlorotrifluoroethylene homopolymers. Such are available as ACLON® resin from Honey well International Inc. of Morristown, New Jersey.

Adjacent to the fluoropolymer layer is an adhesive layer, also referred to in the art as a "tie" layer, between each film layer. In accordance with the present invention, suitable adhesive polymers include modified polyolefin composinons having at least one functional moiety selected from the group consisting of unsaturated polycarboxylic acids and anhydrides thereof Such unsaturated carboxylic acid and anhydrides include maleic acid and anhydride, fumaric acid and anhydride, crotonic acid and anhydride, citraconic acid and anhydride, itaconic acid an anhydride and the like. Of these, the most preferred is maleic anhydride. The modified polyolefins suitable for use in this invention include compositions described in U.S. patents 3,481,910; 3,480,580; 4,612,155 and 4,751,270. The preferred modified polyolefin composition comprises from about 0.001 and about 20 weight percent of the functional moiety, based on the total weight of the modified polyolefin. More preferably the functional moiety comprises from about 0.05 and about 10 weight percent, and most preferably from about 0.1 and about 5 weight percent. The modified polyolefin composition may also contain up to about 40 weight percent of thermoplastic elastomers and alkyl esters as described in U.S. patent 5,139,878.

Adjacent the adhesive layer is a layer of a cyclo olefin homopolymer, copolymer or blends thereof. Such polymers are described, for example, in U.S. patents 5,218,049; 5,783,273 and 5,912,070. Most preferred are copolymers of ethylene and norbomene. Cyclo olefins may be obtained commercially from Mitsui Petrochemical Industries, Ltd. of Tokyo, Japan, or Ticona of Summit, New Jersey.

In the preferred embodiment, each of the fluoropolymer layer, adhesive layer and cyclo olefin layer are substantially transparent to provide an overall substantially transparent film.

The multilayer films of the present invention can have a variety of structures so long as there is an adhesive layer between each polymer layer. A typical film structure includes a three-layer structure, which comprises a cyclo olefin layer, an adhesive layer and a fluoropolymer layer. Another typical film structure is a five-layer structure, which comprises a fluoropolymer layer, an adhesive layer, a cyclo olefin layer, an adhesive layer and a fluoropolymer layer. These are only two of many possible combinations of multilayer film structures, and any variation of the order and thickness of the layers of the fluoropolymer and cyclo olefin layer can be made. In addition, the multilayered structure may have one or more optional additional layers of another polymer attached to the fluoropolymer layer or the cyclo olefin layer, either directly or via an additional adhesive layer. Such optional additional layers may comprise a thermoplastic polymer layer such as a polyolefin, e.g. a polyethylene or polypropylene homopolymer or copolymer, a polyester, a polyolefm, a vinyl ester, polyamide, polyvinyl chloride, polyvinylidene chloride, poly(acrylonitrile) homopolymer or copolymer, polyvinyl alcohol or ethylene vinyl alcohol. Such films are well known in the art.

The multilayer films of this invention may be produced by conventional methods useful in producing multilayer films, including coextrusion and lamination techniques. Suitable coextrusion techniques are described in U.S. patents 5,139,878 and 4,677,017, except coextrusion in this invention is conducted at from about 230 °C to about 400 °C, preferably from about 260 °C to about 370 °C. If coextrusion is performed at a higher temperature, the film polymers tend to degrade significantly and lose their film properties. If coextrusion is done at a lower temperature, the film has a non-uniform, hazy pattern indicative of melt fracture. Coextrusion techniques include methods which include the use of a feed block with a standard die, a multimanifold die such as a circular die, as well as a multimanifold die such as used in forming multilayer films for forming flat cast films and cast sheets.

One advantage of coextruded films is the formation of a multilayer film in a one process step by combining molten layers of each of the film layers of fluoropolymer, tie layer composition, and cyclo olefin layer, as well as optionally more film layers, into a unitary film structure. In order to produce a multilayer film by a coextrusion process, it is necessary that the constituents used to form each of the individual films be compatible with the film extrusion process. The term "compatible" in this respect means that the film-forming compositions used to form the films have melt properties which are sufficiently similar so as to allow coextrusion. Melt properties of interest include, for example, melting points, melt flow indices, apparent viscosity, as well as melt stability. It is important that such compatibility be present to assure the production of a multilayer film having good adhesion and relatively uniform thickness across the width of the film being produced. As is known in the art, film-forming compositions, which are not sufficiently compatible to be useful in a coextrusion process frequently produce films having poor interfacial lamination, poor physical properties as well as poor appearance.

One skilled in the art can readily weigh the above-noted compatibility in order to select polymers having desirable physical properties and determine the optimal combination of relative properties in adjacent layers without undue experimentation. If a coextrusion process is used, it is important that the constituents used to form the multilayer film be compatible within a relatively close temperature range in order to permit extrusion through a common die. It has been found that the variation of the quantity of the modified polyolefin within the tie layer composition provides an adhesive layer forming composition which is of sufficiently high melt viscosity, especially in the preferred range of compositions described above, to be particularly useful in a coextrusion process with the fluoropolymer film forming composition and the cyclo olefin film forming composition. The coextruded film may be cast onto a casting roller or blown as a bubble which is then collapsed, using techniques well known in the art.

Alternatively, the multilayer films of the present invention can be produced by lamination whereby a multilayer film structure is formed from pre-fabricated film plies. Typically, laminating is done by positioning the individual layers of the inventive film on one another under conditions of sufficient heat and pressure to cause the layers to combine into a unitary film. Typically the fluoropolymer, adhesive, and cyclo olefin layers are positioned on one another, and the combination is passed through the nip of a pair of heated laminating rollers by techniques well known in the art such as those described in U.S. patent 3,355,347. Lamination heating may be done at temperatures ranging from about 120 °C to about 175 °C, preferably from about 150°C to about 175 °C at pressures ranging from about 5 psig (0.034 MPa) to about 100 psig (0.69 MPa) for from about 5 seconds to about 5 minutes, preferably from about 30 seconds to about 1 minute.

The multilayer film, whether comprising or three or more layer structure, may be stretched or oriented in any desired direction using methods well known to those skilled in the art. For purposes of this invention, the terms "orienting" and "stretching" shall be used interchangeably. Examples of such methods include those set forth in U.S. patent 4,510,301. In such a stretching operation, the film may be stretched uniaxially in either the direction coincident with the direction of movement of the film being withdrawn from the casting roll, also referred to in the art as the "machine direction", or in as direction which is perpendicular to the machine direction, and referred to in the art as the "transverse direction", or biaxially in both the machine direction and the transverse direction. The multilayered film of the invention are particularly useful for forming thermoformed three dimensionally shaped articles such as blister packaging for pharmaceuticals. This may be done by forming the film around a suitable mold and heating in a method well known in the art. We have found that the fluoropolymer films of the present invention have sufficient dimensional stability to be stretched at least about 1.5 and preferably from about 1.5 to about 10 times in either the machine direction or the transverse direction or both. Another noteworthy characteristic of the films of the present invention is that they exhibit improved tensile modulus, mechanical strength, and the most significantly of all, excellent barrier properties towards both water vapor and oxygen after being stretched. With these composite films, the degree of attainable water vapor barrier properties is significantly improved without increasing the film gauge.

Although each layer of the multilayer film structure may have a different thickness, the thickness of each of the fluoropolymer and cyclo olefin layers of the films in the post-stretched multilayer films structure is preferably from about 0.05 mils (1.3 µm) to about 100 mils (2540 µm), and more preferably from about 0.05 mils (1.3 µm) to about 50 mils (1270 µm). The thickness of the post-stretched adhesive layer may vary, but is generally in the range of from about 0.02 mils to about 12 mils (305 µm), preferably from about 0.05 mils (1.3 µm) to about 1.0 mils (25 µm), and most preferably from about 0.1 mils (25 µm) to about 0.8 mils (20 µm). While such thicknesses are preferred as providing a readily flexible film, it is to be understood that other film thicknesses may be produced to satisfy a particular need and yet fall within the scope of the present invention; such thicknesses which are contemplated include plates, thick films, and sheets which are not readily flexible at room temperature (approx. 20 °C.).

Water vapor transmission rate (WVTR) may be determined via the procedure set forth in ASTM F1249. In the preferred embodiment, the overall multilayered film according to this invention has a WVTR of from about 0.1 or less gm/100 in²/day (gm/645cm²/day) of the overall film at 37.8°C and 100%RH, preferably from 0.001 to about 0.07 gm/100 in²/day (gm/645cm²/day) of the overall film, and more preferably from 0.001 to about 0.04 gm/100 in²/day (gm/645 cm²/day) of the overall film.

Oxygen transmission rate (OTR) may be determined via the procedure of ASTM D-3985 using an OX-TRAN 2/20 instrument manufactured by Modem Controls, Inc., operated at 23°C,0%RH. In the preferred embodiment, the overall multilayered film according to this invention has an OTR of from about 50 or less cc/100 in²/day cm³/645 cm²/day) of the overall film preferably from about 0.001 to about 20 cc/100 in²/day (cm³/645 cm²/day) of the overall film, and more preferably from about 0.001 to about 10 cc/100 in²/day of the overall film.

The following non-limiting examples serve to illustrate the invention.

### EXAMPLE 1 (COMPARATIVE)

Cyclic olefin copolymer (COC) (density: 1.02 gm/cc, glass transition temperature: 70°C, melt flow rate (ASTM D1238): 15 gm/10 minutes, from Mitsui) was extruded through a 3.8 cm (1.5") diameter Killion single screw extruder (L/D=24/1) equipped with three heating zones and two adapter zones. The extruder barrel temperature was set at 238°C, 238°C, and 238°C for the zones 1-3 and the adapters were maintained at 249°C. The melt temperature was measured at 240°C. The extrudate, after passing through an extrusion film die maintained at 249°C, was then cast on a roll kept at 70°C, followed by a cooling roll set at 32°C. The resultant monolayer film has a thickness of 254 µm Moisture barrier, measured by water vapor transmission rate (WVTR) based on ASTM F1249, was 0.022 gm/100 in²/day (gm/645cm²/day) at 37.8°C and 100 %RH for this monolayer COC film.

### EXAMPLE 2 (COMPARATIVE)

pCTFE homopolymer (density: 2.11 gm/cc, melting point: 211°C, from Honeywell) was extruded through a 3.8 cm (1.5") diameter Killion single screw extruder (L/D=24/1) equipped with three heating zones and two adapter zones. The extruder barrel temperature was set at 291°C, 293°C, and 293°C for the zones 1-3 and the adapters were maintained at 293°C. The melt temperature was measured at 292°C. The extrudate, after passing through an extrusion film die maintained at 282°C, was then cast on a roll kept at 49°C, followed by a cooling roll set at 32°C. The resultant monolayer film has a thickness of 25 µm. The WVTR was 0.016 gm/100 m²/day (gm/645 cm²/day) at 37.8°C and 100 %RH for this monolayer PCTFE film.

### EXAMPLE 3

A three layer film was coextruded using a cyclic olefin copolymer (same as Comparative Example 1), PCTFE homopolymer (same as Comparative Example 2), and a maleic anhydride modified polyolefin tie resin (density: 0.88 gm/cc, melt index: 0.4 gm/10 min. at 190°C, from Mitsui) to make the following structure: PCTFE/tie/COC. The COC was extruded through a 3.8 cm (1.5") diameter Killion single screw extruder (L/D=24/1) equipped with three heating zones and two adapter zones. The extruder barrel temperatures were set at 238°C, 238°C, and 235°C and the adapters were maintained at 232°C. The melt temperature was 233°C. The maleic anhydride modified tie resin was extruded through a 3.2 cm (1.25") diameter Killion single screw extruder equipped with four heating zones and two adapter zones. The extruder barrel temperatures were set at 218°C, 271°C, 293°C, 293°C and the adapters were maintained at 293°C. The melt temperature was 293°C. PCTFE homopolymer was extruded following the same procedure described in Example 2. The three-layer extrudate, after passing through a coextrusion film die maintained at 266°C, was then cast on a roll kept at 49°C, followed by a cooling roll set at 32°C. The resultant three layer film had a overall thickness of 292 µm, where the PCTFE layer alone is about 25 µm, the COC layer is about 254 µm, and the tie resin is about 13 µm.

The WVTR was 0.009 gm/100 in²/day (gm/645 cm²/day) at 37.8°C and 100 %RH for the three layer film (PCTFE/tie/COC) versus 0.022 gm/100 in²/day (gm/645 cm²/day) of the control of Example 1 of 254 µm cast monolayer COC and 0.016 gm/100 in²/day (gm/645cm²/day) of the control of Example 2 of 25 µm cast monolayer PCTFE. It represents almost 144% of moisture improvement over monolayer COC and 78% of moisture improvement over monolayer PCTFE.

The OTR was about 3 cc/100 in²/day (cm³/645cm²/day) at 25 deg C and 0% RH for the three layer film (PCTFE/tie/COC) versus 6 cc/100 in²/day (cm³/645cm²/day) of the control of Example 1 of 254 µm cast monolayer COC and 7 cc/100 in²/day (cm³/645cm²/day) of the control of Example 2 of 25 µm cast monolayer PCTFE.

The three layer film was also tested for bond strength (ASTM F904) and mechanical properties (ASTM D882). The bond strength between COC and PCTFE using Scotch 610 tape backing support was between 580 and 600 gm/in. The mechanical properties were listed below:

| Mechanical Properties | Machine Direction | Transverse Direction |
|---|---|---|
| Tensile Modulus, MPa (psi) | 1109 (161,000) | 965 (140,000) |
| Tensile Strength at yield, MPa (psi) | 25.5 (3,700) | 17.2 (2,500) |
| Elongation at yield, % | 6.0 | 6.0 |
| Tensile Strength at break, MPa (psi) | 27.6 (4,000) | 17.9 (2,600) |
| Elongation at break, % | 8.4 | 6.4 |
| Elmendorf Tear Strength, gms/layer | 310 | 290 |

### EXAMPLE 4

With the same structure, the thicknesses of the PCTFE and COC layers were varied. The data is attached in Table 1 below.

### EXAMPLE 5 AND 6

A five layer film structure (PCTFE/tie/COC/tie/PCTFE) was made using the same processing conditions described in Example 3. In Examples 5 and 6, the feedblock was set to allow the five layer film construction instead of the three layer films in Examples 3 and 4. The difference between Examples 5 and 6 was in the total thickness of PCTFE and COC as shown in Table 1:

**TABLE 1**

| | EXAMPLE 4 | EXAMPLE 5 | EXAMPLE 6 |
|---|---|---|---|
| PCTFE thickness, µm | 15 | 25 | 50 |
| Tie layer thickness, µm | 13 | 25 | 25 |
| COC thickness, µm | 265 | 245 | 220 |
| Total thickness, µm | 293 | 295 | 295 |
| WVTR, gm/100 in2/day (gm/645cm²/day) | 0.012 | 0.009 | 0.006 |
| @ 37.8°C and 100%RH | | | |

### EXAMPLE 7

A two layer film is adhesive laminated using a cyclic olefin copolymer (same as Comparative Example 1), PCTFE homopolymer (same as Comparative Example 2), and an aqueous adhesive in the following structure: PCTFE/adhesive/COC. The PCTFE and COC films are produced as monolayer films in this process. The two films are laminated using the COC as the primary web. The primary web is corona treated and coated with a polyurethane adhesive (made by Morton International Inc.). The adhesive coated web then passes through a drying oven and the adhesive dried. The secondary web is corona treated and fed into a temperature controlled laminating nip and laminated to the primary web. The resultant two layer film has an overall thickness of 280 µm. This two layer film can be thermoformed using conventional blister forming equipment to produce a high barrier blister cavity suitable for packaging moisture sensitive drug products. As compared to a two layer 254 µm PVC/ 25 µm PCTFE structure laminated in the same manner, the barrier provided by PCTFE/adhesive/COC is significantly higher.

### EXAMPLE 8

A multilayer film is produced by laminating a cyclic olefin copolymer (same as Comparative Example 1), PCTFE homopolymer (same as Comparative Example 2), and a polypropylene layer to provide protection to the COC, via a polyurethane adhesive (made by Morton International Inc.) according to the structure: PCTFE/adhesive/COC/adhesive/PP. The films are laminated using the COC as the primary web. The primary web is corona treated and coated with an adhesive. The adhesive coated web is then passed through a drying oven and the adhesive dried. The secondary web is corona treated and fed into a temperature controlled laminating nip and laminated to the primary web. The resultant two layer film is treated as the primary web and is corona treated and adhesive coated. The coated film is passed through a drying oven and laminated to the corona treated PP layer in a heated nip and wound into a roll as a three layer laminate. This multilayer film can be thermoformed using conventional blister forming equipment to produce a high barrier blister cavity suitable for packaging moisture sensitive drug products. When compared to a two layer 254 µm PVC/ 25 µm PCTFE structure laminated in the same manner, the three layer structure will have significantly higher barrier than the PVC/adhesive/PCTFE structure.

### EXAMPLE 9

Films from Examples 3, 5, 7, and 8 are oriented either monoaxially or biaxially using simultaneous or sequential orientation to provide a thin film with unusually high barrier properties. Monoaxial orientation in the machine direction (MD) or the transverse direction (TD) comprises mechanically stretching the base film from Examples 3, 4 or 5 by heating the film to about 80°C or above and cooling to room temperature. The film can be oriented from about 1.5 times its original length to about 10 times its original length. The resulting film having improved barrier to moisture and reduced mechanical strength in the opposite the transverse direction of orientation. These films are suitable for pouching applications where tear is desired in one direction or for push through lid stocks.

### EXAMPLE 10

Biaxially oriented films from Example 3, 5, 7 and 8 are simultaneously or sequentially MD/TD oriented by stretching in the MD and then TD from about 1.5 times its original length to about 10 times its original length in the longitudinal and transverse directions. These films have balanced tensile properties and provide added barrier per mil thickness. The films are formed into pouches and barrier lid stock.

It can be seen that the present invention provides highly oriented dimensionally stable fluoropolymer containing films which have improved mechanical properties and water vapor barrier capability, and are transparent. The films can be stretched uniaxially in either direction or biaxially. The films of this invention are useful as flat films or can be formed, such as be thermoforming, into desired shapes. The films are useful for a variety of end applications, such as for medical packaging, pharmaceutical packaging and other industrial uses. For example, the films can be used in constructions to form blister packs for pills and other pharmaceuticals.

## Claims

1. A film which comprises at least one fluoropolymer layer and at least one cyclo olefin polymer layer comprising at least cyclo olefin homopolymer or copolymer attached to a surface of said fluoropolymer layer by an intermediate adhesive layer, wherein said intermediate adhesive layer comprises a polyurethane, an epoxy or at least one polyolefin having at least one functional moiety of an unsaturated carboxylic acid or anhydride thereof.

2. The film of claim 1 wherein said intermediate adhesive layer comprises at least one polyolefin having at least one functional moiety of an unsaturated carboxylic acid or anhydride thereof.

3. The film of claim 2 wherein said cyclo olefin polymer layer comprises at least one cyclo olefin homopolymer.

4. The film of claim 2 wherein said cyclo olefin polymer layer comprises at least one cyclo olefin containing copolymer.

5. The film of claim 2 wherein said cyclo olefin polymer layer comprises at least one copolymer of a cyclo olefin and ethylene.

6. The film of claim 5 wherein said cyclo olefin comprises a copolymer of ethylene and norbornene.

7. The film of claim 2 which has been uniaxially stretched at least 1.5 times in either its longitudinal or transverse direction.

8. The film of claim 2 which has been biaxially stretched at least 1.5 times in each of its longitudinal and transverse directions.

9. The film of claim 1, wherein said fluoropolymer comprises a poly(chlorotrifluoroethylene) homopolymer or copolymer, said at least one cyclo olefin polymer layer comprises at least one cyclo olefin homopolymer or a copolymer of a cyclo olefin and ethylene, which film has been uniaxially stretched about 1.5 or more times in one linear direction or biaxially stretched about 1.5 or more times in each of its longitudinal and transverse directions.

10. The film of claim 1 or claim 9 further comprising another cyclo olefin layer comprising at least one cyclo olefin homopolymer or copolymer attached to another surface of said fluoropolymer layer by another intermediate adhesive layer, wherein said another intermediate adhesive layer comprises at least one polyolefin having at least one functional moiety of an unsaturated carboxylic acid or anhydride thereof.

11. The film of claim 1 further comprising another fluoropolymer layer attached to said cyclo olefin layer by another intermediate adhesive layer, wherein said another intermediate layer comprises at least one polyolefin having at least one functional moiety of an unsaturated carboxylic acid or anhydride thereof.

12. The film of claim 2 wherein said adhesive layer comprises a polyolefin having at least one functional moiety of maleic anhydride.

13. The film of claim 2 wherein said fluoropolymer is selected from the group consisting of chlorotrifluoroethylene homopolymers, chlorotrifluoroethylene containing copolymers and blends thereof.

14. The film of claim 2 wherein said fluoropolymer comprises a poly (chlorotrifluoroethylene) homopolymer.

15. The film of claim 2 wherein said fluoropolymer comprises a poly(chlorotrifluoroethylene) containing copolymer.

16. The film of any of claims 1 and 9 to 11, wherein the layers of said film are coextruded.

17. A three-dimensional article obtainable by thermoforming the film of claim 1 or claim 9.

18. A method of producing a film which comprises, conducting either of steps (a) or (b):
(a) laminating at least one layer of a fluoropolymer to one surface of a layer of a cyclo olefin homopolymer by on intermediate adhesive layer to thereby from the film, or
(b) coextruding at least one layer of a fluoropolymer, and at least one cyclo olefin polymer layer comprising at least one cyclo olefin homopolymer or copolymer attached to a surface of the fluoropolymer layer by a coextruded intermediate adhesive layer, and then forming the attached layers into a film; wherein said intermediate adhesive layer comprises at least one of a polyurethane, an epoxy or at least one polyolefin having at least one functional moiety of an unsaturated carboxylic acid or anhydride thereof.

19. The method of claim 18, wherein step (b) is conducted further comprising coextruding and attaching another cyclo olefin polymer layer comprising at least one cyclo olefin homopolymer or copolymer to another surface of said fluoropolymer layer by another intermediate adhesive layer.

20. The method of claim 18, wherein step (b) is conducted comprising coextruding and attaching another layer of a fluoropolymer to another surface of said cyclo olefin polymer layer by another intermediate adhesive layer.

21. The method of claim 18 wherein said fluoropolymer comprises a poly(chlorotrifluoroethylene) homopolymer or copolymer.

22. The method of claim 18, wherein step (a) is conducted and further comprises laminating and attaching another cyclo olefin polymer layer comprising at least cyclo olefin homopolymer or copolymer to another surface of said fluoropolymer layer by another intermediate adhesive layer.

23. A method of producing a film as claimed in step (a) of claim 18, which comprises laminating at least one layer of a fluoropolymer to one surface of a layer of a cyclo olefin homopolymer by an intermediate adhesive layer, wherein said film is uniaxially stretched from at least 1.5 times to about 10 times in either of its longitudinal and transverse directions or biaxially stretched from at least 1.5 times to about 10 times in each of its longitudinal and transverse directions, wherein said fluoropolymer comprises a poly(chlorotrifluoroethylene) homopolymer or copolymer, said at least one cyclo olefin polymer layer comprises at least one cyclo olefin homopolymer or a copolymer of a cyclo olefin and ethylene, and said intermediate adhesive layer comprises at least one of a polyurethane, an epoxy or at least one polyolefin having at least one functional moiety of an unsaturated carboxylic acid or anhydride thereof.

24. The method of step (b) of claim 18, or claim 19 or claim 20, wherein sadi at least one cyclo olefin polymer layer comprises at least one cyclo olefin homopolymer or a copolymer of a cyclo olefin and ethylene.

## Patentansprüche

1. Folie, die mindestens eine Fluorpolymerschicht und mindestens eine mindestens ein Cycloolefinhomopolymer oder -copolymer umfassende Cycloolefinpolymerschicht, die durch eine Klebezwischenschicht an einer Oberfläche der Fluorpolymerschicht angebracht ist, umfasst, wobei die Klebezwischenschicht ein Polyurethan, ein Epoxy oder mindestens ein Polyolefin mit mindestens einer funktionellen Einheit einer ungesättigten Carbonsäure oder eines Anhydrids davon umfasst.

2. Folie nach Anspruch 1, wobei die Klebezwischenschicht mindestens ein Polyolefin mit mindestens einer funktionellen Einheit einer ungesättigten Carbonsäure oder eines Anhydrids davon umfasst.

3. Folie nach Anspruch 2, wobei die Cycloolefinpolymerschicht mindestens ein Cycloolefinhomopolymer umfasst.

4. Folie nach Anspruch 2, wobei die Cycloolefinpolymerschicht mindestens ein cycloolefinhaltiges Copolymer umfasst.

5. Folie nach Anspruch 2, wobei die Cycloolefinpolymerschicht mindestens ein Copolymer eines Cycloolefins und von Ethylen umfasst.

6. Folie nach Anspruch 5, wobei das Cycloolefin ein Copolymer von Ethylen und Norbornen umfasst.

7. Folie nach Anspruch 2, die um mindestens das 1,5-Fache entweder in ihrer Längs- oder ihrer Querrichtung einaxial gestreckt wurde.

8. Folie nach Anspruch 2, die um mindestens das 1,5-Fache in jede ihrer Längs- oder ihrer Querrichtung zweiaxial gestreckt wurde.

9. Folie nach Anspruch 1, wobei das Fluorpolymer ein Poly(chlortrifluorethylen)homopolymer oder -copolymer umfasst, die mindestens eine Cycloolefinpolymerschicht mindestens ein Cycloolefinhomopolymer oder ein Copolymer eines Cycloolefins und von Ethylen umfasst, wobei die Folie um etwa das 1,5-Fache oder mehr in einer linearen Richtung einaxial oder um etwa das 1,5-Fache oder mehr in jede ihrer Längs- und Querrichtung gestreckt wurde.

10. Folie nach Anspruch 1 oder Anspruch 9, ferner umfassend eine andere mindestens ein Cycloolefinhomopolymer oder -copolymer umfassende Cycloolefinschicht, die durch eine andere Klebezwischenschicht an einer anderen Oberfläche der Fluorpolymerschicht angebracht ist, wobei die andere Klebezwischenschicht mindestens ein Polyolefin mit mindestens einer funktionellen Einheit einer ungesättigten Carbonsäure oder eines Anhydrids davon umfasst.

11. Folie nach Anspruch 1, ferner umfassend eine andere Fluorpolymerschicht, die durch eine andere Klebezwischenschicht an der Cycloolefinschicht angebracht ist, wobei die andere Klebezwischenschicht mindestens ein Polyolefin mit mindestens einer funktionellen Einheit einer ungesättigten Carbonsäure oder eines Anhydrids davon umfasst.

12. Folie nach Anspruch 2, wobei die Klebeschicht ein Polyolefin mit mindestens einer funktionellen Einheit eines Maleinsäureanhydrids umfasst.

13. Folie nach Anspruch 2, wobei das Fluorpolymer aus der Gruppe bestehend aus Chlortrifluorethylenhomopolymeren, chlortrifluorethylenhaltigen Copolymeren und Mischungen davon ausgewählt ist.

14. Folie nach Anspruch 2, wobei das Fluorpolymer ein Poly(chlortrifluorethylen)homopolymer umfasst.

15. Folie nach Anspruch 2, wobei das Fluorpolymer ein poly(chlortrifluorethylen)haltiges Copolymer umfasst.

16. Folie nach einem der Ansprüche 1 und 9 bis 11, wobei die Schichten der Folie coextrudiert sind.

17. Dreidimensionaler Gegenstand, der durch Warmformen der Folie nach Anspruch 1 oder Anspruch 9 erhältlich ist.

18. Verfahren zur Herstellung einer Folie, das das Durchführen der Schritte (a) oder (b) umfasst:
(a) Laminieren mindestens einer Schicht aus einem Fluorpolymer auf eine Oberfläche einer Schicht aus einem Cycloolefinhomopolymer durch eine Klebezwischenschicht, um **dadurch** die Folie zu formen, oder
(b) Coextrudieren mindestens einer Schicht aus einem Fluorpolymer und mindestens einer mindestens ein Cycloolefinhomopolymer oder -copolymer umfassenden Cycloolefinpolymerschicht, die durch eine coextrudierte Klebezwischenschicht an einer Oberfläche der Fluorpolymerschicht angebracht ist, und dann Formen der angebrachten Schichten zu einer Folie; wobei die Klebezwischenschicht mindestens eines von einem Polyurethan, einem Epoxy oder mindestens einem Polyolefin mit mindestens einer funktionellen Einheit einer ungesättigten Carbonsäure oder eines Anhydrids davon umfasst.

19. Verfahren nach Anspruch 18, wobei Schritt (b) durchgeführt wird, indem er ferner das Coextrudieren und Anbringen einer anderen mindestens ein Cycloolefinhomopolymer oder -copolymer umfassenden Cycloolefinpolymerschicht an eine andere Oberfläche der Fluorpolymerschicht durch eine andere Klebezwischenschicht umfasst.

20. Verfahren nach Anspruch 18, wobei Schritt (b) durchgeführt wird, indem er ferner das Coextrudieren und Anbringen einer anderen Schicht aus einem Fluorpolymer an eine andere Oberfläche der Cyclolefinpolymerschicht durch eine andere Klebezwischenschicht umfasst.

21. Verfahren nach Anspruch 18, wobei das Fluorpolymer ein Poly(chlortrifluorethylen)homopolymer oder -copolymer umfasst.

22. Verfahren nach Anspruch 18, wobei Schritt (a) durchgeführt wird, indem er ferner das Laminieren und Anbringen einer anderen mindestens ein Cycloolefinhomopolymer oder -copolymer umfassenden Cycloolefinpolymerschicht an eine andere Oberfläche der Fluorpolymerschicht durch eine andere Klebezwischenschicht umfasst.

23. Verfahren zur Herstellung einer Folie wie in Schritt (a) von Anspruch 18 beansprucht, das das Laminieren mindestens einer Schicht aus einem Fluorpolymer an eine Oberfläche einer Schicht aus einem Cycloolefinhomopolymer durch eine Klebezwischenschicht umfasst, wobei die Folie um mindestens das 1,5- bis etwa 10-Fache in einer ihrer Längs- und Querrichtung einaxial und um mindestens das 1,5- bis etwa 10-Fache in jeder ihrer Längs- und Querrichtung gestreckt wird, wobei das Fluorpolymer ein Poly(chlortrifluorethylen)homopolymer oder -copolymer umfasst, die mindestens eine Cycloolefinpolymerschicht mindestens ein Cycloolefinhomopolymer oder ein Copolymer eines Cycloolefins und von Ethylen umfasst und die Klebezwischenschicht mindestens eines von einem Polyurethan, einem Epoxy oder mindestens einem Polyolefin mit mindestens einer funktionellen Einheit einer ungesättigten Carbonsäure oder eines Anhydrids davon umfasst.

24. Verfahren von Schritt (b) von Anspruch 18 oder Anspruch 19 oder Anspruch 20, wobei die mindestens eine Cycloolefinpolymerschicht mindestens ein Cycloolefinhomopolymer oder ein Copolymer eines Cycloolefins und von Ethylen umfasst.

## Revendications

1. Film qui comprend au moins une couche de polymère fluoré et au moins une couche de polymère de cyclooléfine, comprenant au moins un homopolymère ou copolymère de cyclooléfine, fixée sur une surface de ladite couche de polymère fluoré par une couche adhésive intermédiaire, dans lequel ladite couche adhésive intermédiaire comprend un polyuréthane, un époxy ou au moins une polyoléfine comportant au moins un groupement fonctionnel d'un acide carboxylique insaturé ou de son anhydride.

2. Film selon la revendication 1 dans lequel ladite couche adhésive intermédiaire comprend au moins une polyoléfine comportant au moins un groupement fonctionnel d'un acide carboxylique insaturé ou de son anhydride.

3. Film selon la revendication 2 dans lequel ladite couche de polymère de cyclooléfine comprend au moins un homopolymère de cyclooléfine.

4. Film selon la revendication 2 dans lequel ladite couche de polymère de cyclooléfine comprend au moins un copolymère contenant une cyclooléfine.

5. Film selon la revendication 2 dans lequel ladite couche de polymère de cyclooléfine comprend au moins un copolymère d'une cyclooléfine et d'éthylène.

6. Film selon la revendication 5 dans lequel ladite cyclooléfine comprend un copolymère d'éthylène et de norbornène.

7. Film selon la revendication 2 qui a été étiré uniaxialement au moins 1,5 fois, dans la direction longitudinale ou bien dans la direction transversale.

8. Film selon la revendication 2 qui a été étiré biaxialement au moins 1,5 fois, à la fois dans la direction longitudinale et dans la direction transversale.

9. Film selon la revendication 1, dans lequel ledit polymère fluoré comprend un homopolymère ou copolymère de poly(chlorotrifluoroéthylène), ladite au moins une couche de polymère de cyclooléfine comprend au moins un homopolymère de cyclooléfine ou un copolymère d'une cyclooléfine et d'éthylène, le film ayant été étiré uniaxialement au moins 1,5 fois, dans la direction longitudinale ou bien dans la direction transversale, ou ayant été étiré biaxialement au moins 1,5 fois, à la fois dans la direction longitudinale et dans la direction transversale.

10. Film selon la revendication 1 ou la revendication 9 comprenant en outre une autre couche de cyclooléfine, comprenant au moins un homopolymère ou copolymère de cyclooléfine, fixée sur une autre surface de ladite couche de polymère fluoré par une autre couche adhésive intermédiaire, dans lequel ladite autre couche adhésive intermédiaire comprend au moins une polyoléfine comportant au moins un groupement fonctionnel d'un acide carboxylique insaturé ou de son anhydride.

11. Film selon la revendication 1 comprenant en outre une autre couche de polymère fluoré fixée à ladite couche de cyclooléfine par une autre couche adhésive intermédiaire, dans lequel ladite autre couche intermédiaire comprend au moins une polyoléfine comportant au moins un groupement fonctionnel d'un acide carboxylique insaturé ou de son anhydride.

12. Film selon la revendication 2 dans lequel ladite couche adhésive comprend une polyoléfine comportant au moins un groupement fonctionnel d'anhydride maléique.

13. Film selon la revendication 2 dans lequel ledit polymère fluoré est choisi dans le groupe constitué par les homopolymères de chlorotrifluoroéthylène, les copolymères contenant du chlorotrifluoroéthylène, et leurs mélanges.

14. Film selon la revendication 2 dans lequel ledit polymère fluoré comprend un homopolymère poly(chlorotrifluoroéthylène).

15. Film selon la revendication 2 dans lequel ledit polymère fluoré comprend un copolymère contenant du poly(chlorotrifluoroéthylène).

16. Film selon l'une quelconque des revendications 1 et 9 à 11, dans lequel les couches dudit film sont coextrudées.

17. Article tridimensionnel susceptible d'être obtenu par thermoformage du film de la revendication 1 ou de la revendication 9.

18. Procédé de production d'un film qui comprend la mise en oeuvre de l'une des étapes (a) ou (b) :
(a) stratifier au moins une couche d'un polymère fluoré sur une surface d'une couche d'un homopolymère de cyclooléfine via une couche adhésive intermédiaire afin de former le film, ou
(b) coextruder au moins une couche d'un polymère fluoré, et au moins une couche de polymère de cyclooléfine, comprenant au moins un homopolymère ou copolymère de cyclooléfine, fixée sur une surface de la couche de polymère fluoré par une couche adhésive intermédiaire coextrudée, puis former un film à partir des couches réunies ; dans lequel ladite couche adhésive intermédiaire comprend au moins un polyuréthane, un époxy ou au moins une polyoléfine comportant au moins un groupement fonctionnel d'un acide carboxylique insaturé ou de son anhydride.

19. Procédé selon la revendication 18, dans lequel on met en oeuvre l'étape (b) comprenant la coextrusion et la fixation d'une autre couche de polymère de cyclooléfine comprenant au moins un homopolymère ou copolymère de cyclooléfine sur une autre surface de ladite couche de polymère fluoré via une autre couche adhésive intermédiaire.

20. Procédé selon la revendication 18, dans lequel on met en oeuvre l'étape (b) comprenant la coextrusion et la fixation d'une autre couche d'un polymère fluoré sur une autre surface de ladite couche de polymère de cyclooléfine via une autre couche adhésive intermédiaire.

21. Procédé selon la revendication 18 dans lequel ledit polymère fluoré comprend un homopolymère ou copolymère de poly(chlorotrifluoroéthylène).

22. Procédé selon la revendication 18, dans lequel on met en oeuvre l'étape (a) qui comprend en outre la stratification et la fixation d'une autre couche de polymère de cyclooléfine comprenant au moins un homopolymère ou copolymère de cyclooléfine sur une autre surface de ladite couche de polymère fluoré via une autre couche adhésive intermédiaire.

23. Procédé de production d'un film selon l'étape (a) de la revendication 18, qui comprend la stratification d'au moins une couche d'un polymère fluoré sur une surface d'une couche d'un homopolymère de cyclooléfine via une couche adhésive intermédiaire, dans lequel ledit film est étiré uniaxialement au moins 1,5 fois et jusqu'à environ 10 fois, dans la direction longitudinale ou bien dans la direction transversale, ou est étiré biaxialement au moins 1,5 fois et jusqu'à environ 10 fois, à la fois dans la direction longitudinale et dans la direction transversale, dans lequel ledit polymère fluoré comprend un homopolymère ou copolymère de poly(chlorotrifluoroéthylène), ladite au moins une couche de polymère de cyclooléfine comprend au moins un homopolymère de cyclooléfine ou un copolymère d'une cyclooléfine et d'éthylène, et ladite couche adhésive intermédiaire comprend au moins un polyuréthane, un époxy ou au moins une polyoléfine comportant au moins un groupement fonctionnel d'un acide carboxylique insaturé ou de son anhydride.

24. Procédé selon l'étape (b) de la revendication 18, ou selon la revendication 19 ou la revendication 20, dans lequel ladite au moins une couche de polymère de cyclooléfine comprend au moins un homopolymère de cyclooléfine ou un copolymère d'une cyclooléfine et d'éthylène.
